# EUROPEAN PATENT SPECIFICATION

(11) **EP 1 477 448 B1**
(45) Date of publication and mention of the grant of the patent: **12.09.2007**
(21) Application number: 04076410.2
(22) Date of filing: 12.05.2004
(51) Int. Cl.: B65H 75/40, H02G 11/02

(54) **Cable reel**
Kabeltrommel
Tambour de câble

(30) Priority: 14.05.2003 NL 1023432
(43) Date of publication of application: 17.11.2004
(73) Proprietor: H.A.B.A. B.V., 3155 DL Maasland (NL)
(72) Inventor: Batist, Johannus Josephus Maria, 2671 JT Naaldwijk (NL)
(74) Representative: van Westenbrugge, Andries

(56) References cited:
- DE-B- 1 088 571
- DE-U- 7 323 662
- FR-A- 2 220 734
- GB-A- 1 302 810
- US-B1- 6 273 225
- PATENT ABSTRACTS OF JAPAN vol. 2000, no. 21, 3 August 2001 (2001-08-03) -& JP 2001 114474 A (MOLTEN CORP), 24 April 2001 (2001-04-24)

## Description

The present invention relates to a cable reel according to the preamble of claim 1.

In US 6 273 225 B1 a reel is disclosed, wherein one of the flanges is provided with a U-shaped receptacle into which a socket box can be pushed. With this arrangement the socket box is of rectangular construction. If the socket box has a more complex shape, such a U-shaped receptacle is not satisfactory. Moreover, such a U-shaped receptacle functions only in a specific position. However, for cable reels it is essential that the drum thereof can be put in various positions when winding/unwinding.
British patent specification 236 884 discloses a cable reel where one of the flanges is provided with a receptacle in which a socket component or power-point-like component is accessible. A plug part can be pushed into this receptacle. However, the accessibility is restricted and here again it is necessary that the part to be plugged in is essentially of rectangular construction.
In the case of cable reels that are used, for example, for coupling caravans to fixed sockets at a camping site or the like, the plug parts are irregular and essentially made with a circular cross-section. The constructions shown in the state of the art cannot easily retain such a plug part in a receptacle.

DE 1088571 discloses a cable reel according to the preamble of claim 1, wherein the cable end is kept in position by a leather belt.

DE 7323662 U discloses a cable reel having an internal cavity for receiving the cable end.

The aim of the present invention is to provide a cable reel with which it is possible in a simple manner to store plug parts of the most diverse shapes in a receptacle in the cable reel so that in the storage position there are no trailing free ends.

This aim is realised with a cable reel having the features of claim 1.

According to the invention, the member in the form of a belt is permanently fixed at one end of the receptacle and with the lip of a hook or the like can be inserted into a corresponding lip of a hook or the like at the other end. The member in the form of a belt consists of a flexible material. A stretchable rubbery material is preferred.

The receptacle is particularly suitable for accommodating the short end that is unwound from a cable reel. That is to say the cable wound on the reel consists of a long section, a section of the cable fixed to the reel and a short section extending therefrom. As a result, when used in combination with camper vans or caravans, it is possible to place the reel close to the caravan or camper van and to use the short section to provide a connection to the caravan or camper van. The long section is then unrolled as far as the power supply. With such a construction, according to an advantageous embodiment of the invention three flanges are provided by means of which two drums are delimited, one for the long section of a cable and one for the short section. The front flange for the short section of the cable is provided with the recess and the plug part for the short cable section is placed therein. It will be understood that it is possible to place the plug part of the long end of the cable in such a recess or that it is possible to provide a cable reel which has a cable end only for the long section and a power point or the like is provided at the other end.

The invention will be explained in more detail below with reference to an illustrative embodiment shown in the drawing. In the drawing:
Fig. 1 shows, diagrammatically, a cable reel according to the invention where the plug part for the short end has been placed outside the receptacle without the belt being fastened;
Fig. 2 shows the cable reel according to Fig. 1 where the plug part has been fastened with the belt.

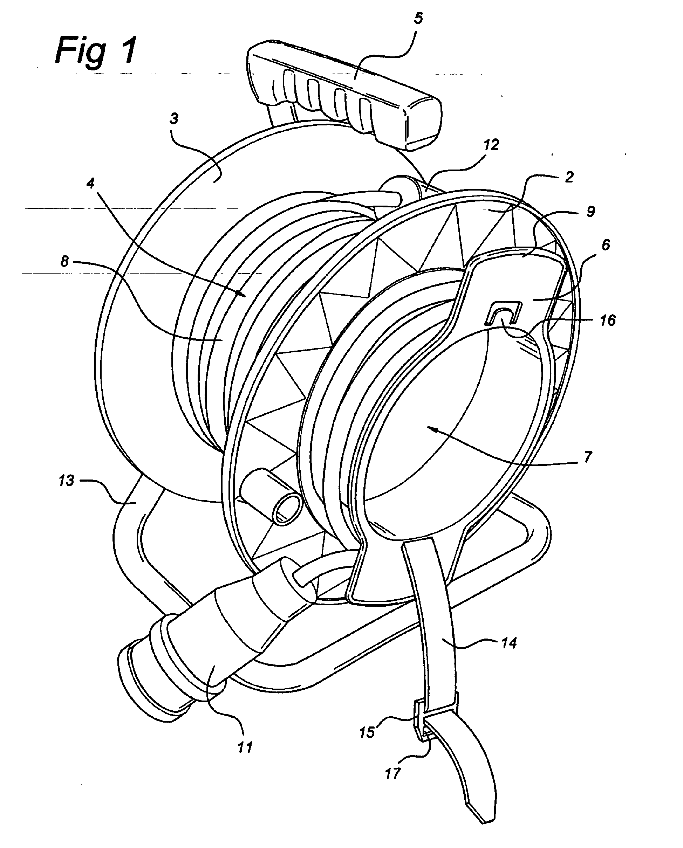

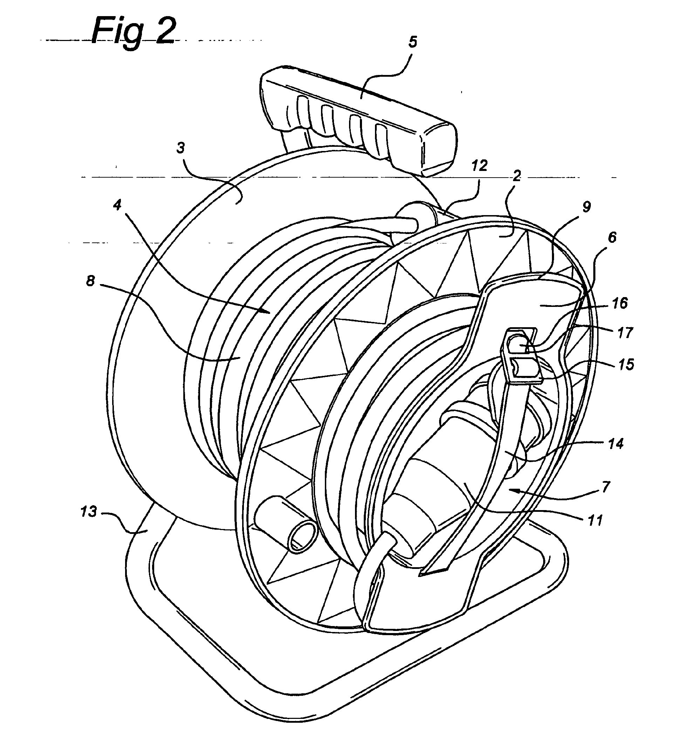

An example of a cable reel according to the invention is shown in Figs. 1 and 2. This consists of a drum formed by two flanges 2 and 3 and a core 4 extending between them. This drum is designed to accommodate the "long cable section". After all, as can be seen from the drawing, there is an auxiliary flange 6 with tabs 9 on which a relatively short end section of the cable 8 can be wound. This end section is provided with a connector 11. The long section is provided with a connector 12. These connectors can be either a plug or a socket. The core 4 is fitted such that it can rotate on a frame 13 that is provided with a handle 5.

A recess 7 has been made in the auxiliary flange 6. This is so sized that connector 11 can be placed therein, as is shown in Fig. 2. A belt 14 of elastic flexible material is fixed to the auxiliary flange 6 on one side of said recess. At the other end, the belt consisting of rubber material is provided with a buckle 15 which can be adjusted relative to the belt 14. An eye in the buckle 15 that is able to interact with a hook-shaped part 16 on the opposite side of the auxiliary flange 6 is indicated by 17.

The fixed position of the connector is shown in Fig. 2. As a result of the elastic nature of belt 14, this can be fitted so that it is held tightly against the base of the recess 7.

It can be seen from the above that a construction of particularly simple design has been produced with which a connector is prevented in a simple manner from dangling alongside a reel, with all the associated consequences and disadvantages. Although the invention has been described with reference to the preferred embodiment, it will be understood that numerous modifications can be made thereto. For instance, it is possible to make the recess in one of the flanges 2 or 3 and to construct the part 14 in the form of a belt in a different way. These and further modifications are obvious to those skilled in the art and fall within the scope of the appended claims.

## Claims

1. Cable reel (1) comprising a core (4) provided on either side with flanges (2, 3, 6), one of said flanges having a receptacle (9) for a plug part (11) at one end of a cable (8), wherein said receptacle is provided with securing means for said plug part, comprising a belt-shaped member (14), **characterised in that** said belt-shaped member is stretchable and is permanently fixed at one end to a boundary wall of said receptacle and is provided with fastening means (15) at the other end, said flang provided with a receptacle being provided with fastening means (16) interacting therewith.

2. Cable reel according to Claim 1, wherein said fastening means comprise a hook (16) and an eye (17), respectively.

3. Cable reel according to Claim 1 or 2, wherein said fastening means are fitted on said belt such that they are adjustable.

4. Cable reel according to one of the preceding claims, wherein said flange provided with a receptacle has a core and auxiliary flange (16) for accommodating a few windings of a cable end provided with a plug part.

## Patentansprüche

1. Kabeltrommel (1) mit einem Kern (4), der auf jeder Seite mit Flanschen (2, 3, 6) versehen ist, wovon einer von den Flanschen eine Aufnahme (9) für ein Steckerteil (11) an einem Ende eines Kabels (8) hat, wobei die Aufnahme mit einer Sicherungseinrichtung für das Steckerteil versehen ist, die ein riemenförmiges Element (14) aufweist, **dadurch gekennzeichnet, dass** das riemenförmige Element dehnbar ist, und permanent an dem einen Ende einer Begrenzungswand der Aufnahme befestigt und mit einer Befestigungseinrichtung (15) an dem anderen Ende versehen ist, wobei der mit einer Aufnahme versehene Flansch mit einer damit zusammenarbeitenden Befestigungseinrichtung (16) versehen ist.

2. Kabeltrommel nach Anspruch 1, wobei die Befestigungseinrichtung einen Haken (16) bzw. eine Öse (17) aufweist.

3. Kabeltrommel nach Anspruch 1 oder 2, wobei die Befestigungseinrichtungen an dem Riemen so befestigt sind, dass sie einstellbar sind.

4. Kabeltrommel nach einem der vorstehenden Ansprüche, wobei der mit einer Aufnahme versehene Flansch einen Kern- und Zusatzflansch (16) zum Aufnehmen weniger Windungen eines mit einem Steckerteil versehenen Kabelendes hat.

## Revendications

1. Dévidoir de câble (1) comprenant une partie centrale (4) prévue de chaque côté avec des rebords (2, 3, 6) chacun desdits rebords ayant un logement (9) pour une partie de prise mâle (11) au niveau d'une extrémité d'un câble (8), ledit logement est prévue avec des moyens de sécurité pour ladite partie de prise mâle, comprenant un élément en forme de courroie (14), **caractérisé en ce que** ledit élément en forme de courroie est étirable et est fixé de manière permanente au niveau d'une extrémité à une paroi de délimitation dudit logement et est prévue avec des moyens de fixation (15) au niveau de l'autre extrémité, ledit rebord prévu avec une prise de courant étant doté de moyens de fixation (16) qui interagissent avec celui-ci.

2. Dévidoir de câble selon la revendication 1, dans lequel lesdits moyens de fixation comprennent un crochet (16) et un oeillet (17), respectivement.

3. Dévidoir de câble selon la revendication 1 ou 2, dans lequel lesdits moyens de fixation sont montés sur ladite courroie de sorte qu'ils sont réglables.

4. Dévidoir de câble selon l'une quelconque des revendications précédentes, dans lequel ledit rebord prévu avec un logement a une partie centrale et un rebord auxiliaire (16) pour loger quelques enroulements d'une extrémité de câble munie d'une partie de prise mâle.
